# FASCICULE DE BREVET EUROPEEN

(11) **EP 3 488 034 B1**
(45) Date de publication et mention de la délivrance du brevet: **24.12.2025**
(21) Numéro de dépôt: 17754744.5
(22) Date de dépôt: 21.07.2017
(51) Int. Cl.: D01F 6/86, C08G 63/42, C08G 63/672, C08G 63/199

(54) **POLYESTER THERMOPLASTIQUE SEMI-CRISTALLIN POUR LA FABRICATION DE FIBRES**
HALBKRISTALLINER THERMOPLASTISCHER POLYESTER ZUR HERSTELLUNG VON FASERN
SEMI-CRYSTALLINE THERMOPLASTIC POLYESTER FOR PRODUCING FIBRES

(30) Priorité: 22.07.2016 FR 1657031
(43) Date de publication de la demande: 29.05.2019
(73) Titulaire: Roquette Frères, 62136 Lestrem (FR)
(72) Inventeur: AMEDRO, Hélène, 62400 Bethune (FR); SAINT-LOUP, René, 59160 Lomme (FR)
(74) Mandataire: Plasseraud IP
(86) Numéro de dépôt international: PCT/FR2017/052020
(87) Numéro de publication internationale: WO 2018/015692

(56) Documents cités:
- WO-A1-2016/189239
- CN-A- 103 590 139
- US-A- 6 063 495
- US-A1- 2012 177 854

## Description

### Domaine de l'invention

La présente invention se rapporte à l'utilisation d'un polyester thermoplastique semi-cristallin comprenant au moins un motif 1,4 : 3,6-dianhydrohexitol qui présente d'excellentes propriétés pour la fabrication de fibres.

### Arrière-plan technologique de l'invention

Les matières plastiques sont devenues incontournables pour la fabrication en série d'objets. En effet, leur caractère thermoplastique permet à ces matières d'être transformées à cadence élevée en toutes sortes d'objets ou d'articles.

Certains polyesters aromatiques thermoplastiques ont des propriétés thermiques leur permettant d'être utilisés directement pour la fabrication de matériaux. Ils comprennent des motifs diol aliphatique et diacide aromatique. Parmi ces polyesters aromatiques, on peut citer le polyéthylène téréphtalate (PET), qui est un polyester comprenant des motifs éthylène glycol et acide téréphtalique, servant par exemple à la fabrication de films.

Toutefois, pour certaines applications ou dans certaines conditions d'utilisation, il est nécessaire d'améliorer certaines propriétés mécaniques ou encore de tenue thermique. C'est ainsi que des PET modifiés glycol (PETg) ont été développés. Ce sont généralement des polyesters comprenant, en plus des motifs éthylène glycol et acide téréphtalique, des motifs cyclohexanediméthanol (CHDM). L'introduction de ce diol dans le PET lui permet d'adapter les propriétés à l'application visée, par exemple d'améliorer sa résistance au choc ou ses propriétés optiques.

D'autres PET modifiés ont également été développés en introduisant dans le polyester des motifs 1,4 : 3,6-dianhydrohexitol, notamment de l'isosorbide (PEIT). Ces polyesters modifiés présentent des températures de transition vitreuse plus élevées que les PET non modifiés ou les PETg comprenant du CHDM. En outre, les 1,4 : 3,6-dianhydrohexitols présentent l'avantage de pouvoir être obtenus à partir de ressources renouvelables telles que l'amidon.

Un autre problème de ces PEIT est qu'ils peuvent présenter des propriétés insuffisantes de résistance au choc. De plus, la température de transition vitreuse peut être insuffisante pour la fabrication de certains objets plastiques.

Pour améliorer les propriétés mécaniques des polyesters, il est connu de l'art antérieur d'utiliser des polyesters dont on a réduit la cristallinité. En ce qui concerne les polyesters à base d'isosorbide, on peut citer la demande US 2012/0177854 qui décrit des polyesters comprenant des motifs acide téréphtalique et des motifs diols comprenant de 1 à 60% en moles d'isosorbide et de 5 à 99% de 1,4-cyclohexanediméthanol qui présentent des propriétés de résistance à l'impact améliorées. Comme indiqué dans la partie introductive de cette demande, il s'agit d'obtenir des polymères dont on élimine la cristallinité par l'ajout de comonomères, et donc ici par l'ajout de 1,4-cyclohexanediméthanol. La partie « Exemples » décrit la fabrication de différents poly(ethylène-co-1,4-cyclohexanediméthylène-co-isosorbide) téréphtalates (PECIT) et donne un exemple de poly(1,4-cyclohexanediméthylène-co-isosorbide) téréphtalate (PCIT).

On peut également noter que, tandis que les polymères de type PECIT ont fait l'objet de développements commerciaux, ce n'est pas le cas des PCIT. En effet leur fabrication était jusqu'ici considérée comme complexe, l'isosorbide présentant une faible réactivité comme diol secondaire. Yoon et al. (Synthesis and Characteristics of a Biobased High-Tg Terpolyester of Isosorbide, Ethylene Glycol, and 1,4-Cyclohexane Dimethanol: Effect of Ethylene Glycol as a Chain Linker on Polymerization, Macromolecules, 2013, 46, 7219-7231*)* ont ainsi montré que la synthèse de PCIT est bien plus difficile à réaliser que celle de PECIT. Ce document décrit l'étude de l'influence du taux d'éthylène glycol sur la cinétique de fabrication de PECIT.

Dans *Yoon et al.,* un PCIT amorphe (qui comprend par rapport à la somme des diols environ 29% d'isosorbide et 71% de CHDM), est fabriqué afin de comparer sa synthèse et ses propriétés avec celles des polymères de type PECIT. L'utilisation de températures élevées lors de la synthèse induit une dégradation thermique du polymère formé si on se réfère au premier paragraphe de la partie Synthesis de la page 7222, cette dégradation étant notamment liée à la présence des diols aliphatiques cycliques tels que l'isosorbide. De ce fait, *Yoon et al.* ont utilisé un procédé dans lequel la température de polycondensation est limitée à 270 °C. Yoon et al. ont constaté que, même en augmentant le temps de polymérisation, le procédé ne permet pas non plus d'obtenir un polyester présentant une viscosité suffisante. Ainsi, sans ajout d'éthylène glycol, la viscosité du polyester reste limitée, ceci malgré l'utilisation de temps de synthèse prolongés.

Ainsi, malgré les modifications apportées aux PET, il existe toujours un besoin constant de nouveaux polyesters présentant des propriétés améliorées.

Dans le domaine des matières plastiques, et notamment pour la fabrication de fibres, il est nécessaire de disposer de polyester thermoplastique semi-cristallin aux propriétés améliorées qui permettent d'obtenir des fibres présentant une meilleure tenue thermique ainsi que des propriétés mécaniques améliorées telles que l'allongement à la rupture, la rigidité ou encore la ténacité.

On connait du document US 6,126,992 des objets fabriqués à partir de polymères ayant des motifs acide téréphtalique, des motifs éthylène glycol et des motifs isosorbide et éventuellement un autre diol (par exemple le 1,4-cyclohexanediméthanol). L'ensemble des polymères obtenus présentent ainsi des motifs éthylène glycol car il est largement admis que ces derniers sont nécessaires à l'incorporation de l'isosorbide et à l'obtention d'une température de transition vitreuse élevée. De plus, les exemples de préparation mis en œuvre permettent d'obtenir des polymères dont la composition ne donne pas entière satisfaction dans la fabrication de fibre. En effet, l'exemple 1 décrit notamment la préparation d'un polymère comprenant 44% de motif éthylène glycol et 3% de motif isosorbide soit un ratio motif isosorbide / motif éthylène glycol de 0,36 ce qui n'est pas convaincant pour la fabrication de fibres.

Le document US 6,063,495 décrit des fibres en polyester fabriquées à partir d'un polymère ayant des motifs isosorbide, des motifs acide téréphtalique, et des motifs éthylène glycol. Les fibres ainsi fabriquées sont adaptées pour un usage commercial ou industriel dans le textile notamment. Cependant ces polyesters ne présentent pas une viscosité réduite en solution suffisante pour donner entière satisfaction dans la fabrication de fibres.

Ainsi, il existe encore à ce jour le besoin de disposer de polyesters thermoplastiques semi-cristallin contenant des motifs 1,4 : 3,6-dianhydrohexitol pour la fabrication de fibres présentant des propriétés mécaniques et thermiques améliorées.

Il est donc du mérite de la Demanderesse d'avoir trouvé que cet objectif pouvait, contre toute attente, être atteint avec un polyester thermoplastique semi-cristallin à base d'isosorbide ne présentant pas d'éthylène glycol alors qu'il était connu jusqu'à présent que ce dernier était indispensable pour l'incorporation dudit l'isosorbide.

En effet, le polyester thermoplastique semi-cristallin utilisé selon la présente invention, grâce à une viscosité et un ratio en motif particuliers, présente des propriétés améliorées pour une utilisation selon l'invention dans la fabrication de fibres.

### Résumé de l'invention

L'invention a ainsi pour objet l'utilisation d'un polyester thermoplastique semi-cristallin pour la fabrication de fibres, ledit polyester comprenant :
- au moins un motif 1,4 : 3,6-dianhydrohexitol (A) ;
- au moins un motif diol alicyclique (B) autre que les motifs 1,4 : 3,6-dianhydrohexitol (A) ;
- au moins un motif acide téréphtalique (C) ;

dans lequel le ratio molaire (A)/[(A)+(B)] étant d'au moins 0.1 et d'au plus 0,30 ;
ledit polyester étant exempt de motifs diol aliphatique non cyclique ou comprenant une quantité molaire de motifs diol aliphatique non cyclique, par rapport à la totalité des motifs monomériques du polyester, inférieure à 1%, et dont la viscosité réduite en solution (25°C ;
phénol (50%m) : ortho-dichlorobenzène (50%m) ; 5 g/L de polyester) est supérieure à 50 mL/g.

Un second objet de l'invention concerne un procédé de fabrication de fibre à base du polyester thermoplastique semi-cristallin décrit ci-dessus.

Enfin, un troisième objet de l'invention concerne une fibre comprenant le polyester thermoplastique semi-cristallin précédemment décrit.

Ces polyesters thermoplastique semi-cristallins offrent d'excellentes propriétés et permettent notamment de fabriquer des fibres présentant des propriétés mécaniques améliorées.

### Description détaillée de l'invention

Un premier objet de l'invention concerne l'utilisation d'un polyester thermoplastique semi-cristallin pour la fabrication de fibres, ledit polyester comprenant :
- au moins un motif 1,4 : 3,6-dianhydrohexitol (A) ;
- au moins un motif diol alicyclique (B) autre que les motifs 1,4 : 3,6-dianhydrohexitol (A) ;
- au moins un motif acide téréphtalique (C) ;
dans lequel le ratio molaire (A)/[(A)+(B)] étant d'au moins 0,1 et d'au plus 0,30 et la viscosité réduite en solution supérieure à 50 mL/g.

Par « ratio molaire (A)/[(A)+(B)] » on entend le ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A).

Le terme « fibres » tel qu'utilisé dans la présente invention est synonyme des termes filaments et fils et inclut ainsi les mono ou multi-filament continus ou discontinus, les multi-filaments non tordus ou enchevêtrés, les fils de base.

Le polyester thermoplastique semi-cristallin est exempt de motifs diol aliphatiques non cycliques ou en comprend une faible quantité.

Par « faible quantité molaire de motifs diol aliphatique non cyclique », on entend notamment une quantité molaire de motifs diol aliphatique non cyclique inférieure à 5%. Selon l'invention, cette quantité molaire représente le rapport de la somme des motifs diol aliphatique non cyclique, ces motifs pouvant être identiques ou différents, par rapport à la totalité des motifs monomériques du polyester.

Un diol aliphatique non cyclique peut être un diol aliphatique non cyclique linéaire ou ramifié. Il peut également être un diol aliphatique non cyclique saturé ou insaturé. Outre l'éthylène glycol, le diol aliphatique non cyclique linéaire saturé peut par exemple être le 1,3-propanediol, le 1,4-butanediol, le 1,5-pentanediol, le 1,6-hexanediol, le 1,8-octanediol et/ou le 1,10-decanediol. Comme exemple de diol aliphatique non cyclique ramifié saturé, on peut citer le 2-methyl-1,3-propanediol, le 2,2,4-trimethyl-1,3-pentanediol, le 2-ethyl-2-butyl-1,3-propanediol, le propylèneglycol et/ou le néopentylglycol. Comme exemple de diol aliphatique insaturé, on peut citer par exemple le cis-2-butene-1,4-diol.

Cette quantité molaire de motif diol aliphatique non cyclique est inférieure à 1%. De préférence, le polyester est exempt de motif diol aliphatique non cyclique et plus préférentiellement, il est exempt d'éthylène glycol.

Malgré la faible quantité de diol aliphatique non cyclique, et donc d'éthylène glycol, utilisé pour la synthèse, il est obtenu de manière surprenante un polyester thermoplastique semi-cristallin présentant une viscosité réduite en solution élevée et dans lequel l'isosorbide est particulièrement bien incorporé. Sans être lié par une quelconque théorie, ceci s'expliquerait par le fait que la cinétique de réaction de l'éthylène glycol est beaucoup plus élevée que celle du 1,4 : 3,6-dianhydrohexitol ce qui limite fortement l'intégration de ce dernier dans le polyester. Les polyesters en résultant présentent donc un faible taux d'intégration de 1,4 : 3,6-dianhydrohexitol et par conséquent une température de transition vitreuse relativement basse.

Le monomère (A) est un 1,4 : 3,6-dianhydrohexitol peut être l'isosorbide, l'isomannide, l'isoidide, ou un de leurs mélanges. De préférence, le 1,4 : 3,6-dianhydrohexitol (A) est l'isosorbide.

L'isosorbide, l'isomannide et l'isoidide peuvent être obtenus respectivement par déshydratation de sorbitol, de mannitol et d'iditol. En ce qui concerne l'isosorbide, il est commercialisé par la Demanderesse sous le nom de marque POLYSORB^{®} P.

Le diol alicyclique (B) est également appelé diol aliphatique et cyclique. Il s'agit d'un diol qui peut notamment être choisi parmi le 1,4-cyclohexanedimethanol, le 1,2-cyclohexanedimethanol, le 1,3-cyclohexanedimethanol ou un mélange de ces diols. Très préférentiellement le diol alicyclique (B) est le 1,4-cyclohexanedimethanol. Le diol alicyclique (B) peut être dans la configuration *cis,* dans la configuration *trans* ou peut être un mélange de diols en configuration *cis* et *trans.*

Le ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A), soit (A)/[(A)+(B)], est d'au moins 0,1 et d'au plus 0,30.

Avantageusement, ce ratio est d'au moins 0,1 et d'au plus 0,28, et tout particulièrement ce ratio est d'au moins 0,15 et d'au plus 0,25.

Un polyester thermoplastique semi-cristallin particulièrement adapté pour la fabrication de fibres comprend :
- une quantité molaire de motifs 1,4 : 3,6-dianhydrohexitol (A) allant de 2,5 à 14 % mol ;
- une quantité molaire de motifs diol alicyclique (B) autre que les motifs 1,4 : 3,6-dianhydrohexitol (A) allant de 31 à 42,5 % mol ;
- une quantité molaire de motifs acide téréphtalique (C) allant de 45 à 55 % mol.

Les quantités en différents motifs dans le polyester peuvent être déterminées par RMN 1H ou par analyse chromatographique du mélange de monomères issus d'une méthanolyse ou d'une hydrolyse complète du polyester, de préférence par RMN 1H.

L'homme de l'art peut aisément trouver les conditions d'analyse pour déterminer les quantités en chacun des motifs du polyester. Par exemple, à partir d'un spectre RMN d'un poly(1,4-cyclohexanedimethylène-co-isosorbide téréphtalate), les déplacements chimiques relatifs au 1,4-cyclohexanedimethanol sont compris entre 0,9 et 2,4 ppm et 4,0 et 4,5 ppm, les déplacements chimiques relatifs au cycle téréphtalate sont compris entre 7,8 et 8,4 ppm et les déplacements chimiques relatifs à l'isosorbide sont compris entre 4,1 et 5,8 ppm. L'intégration de chaque signal permet de déterminer la quantité de chaque motif du polyester.

Les polyesters thermoplastiques semi-cristallins utilisés selon l'invention présentent une température de fusion allant de 210 à 295°C, par exemple de 240 à 285 °C.

De plus, les polyesters thermoplastiques semi-cristallins présentent une température de transition vitreuse allant de 85 à 120°C, par exemple de 90 à 115°C. Les températures de transition vitreuse et de fusion sont mesurées par les méthodes classiques, notamment en utilisant la calorimétrie différentielle à balayage (DSC) en utilisant une vitesse de chauffe de 10 °C/min. Le protocole expérimental est détaillé dans la partie « Exemples » ci-après.

Avantageusement, lorsque le polyester thermoplastique semi-cristallin présente une chaleur de fusion supérieure à 10 J/g, de préférence supérieure à 20 J/g, la mesure de cette chaleur de fusion consistant à faire subir à un échantillon de ce polyester un traitement thermique à 170°C pendant 16 heures puis à évaluer la chaleur de fusion par DSC en chauffant l'échantillon à 10 °C/min.

Le polyester thermoplastique semi-cristallin utilisé selon l'invention présente notamment une clarté L* supérieure à 40. Avantageusement, la clarté L* est supérieure à 55, de préférence supérieure à 60, tout préférentiellement supérieure à 65, par exemple supérieure à 70. Le paramètre L* peut être déterminé à l'aide d'un spectrophotomètre, en utilisant le modèle CIE Lab.

Enfin, la viscosité réduite en solution dudit polyester thermoplastique semi-cristallin est supérieure à 50 mL/g et de préférence inférieure à 120 mL/g, cette viscosité pouvant être mesurée à l'aide d'un viscosimètre capillaire Ubbelohde à 25 °C dans un mélange équimassique de phénol et d'ortho-dichlorobenzène après dissolution du polymère à 130 °C sous agitation, la concentration de polymère introduit étant de 5g/L.

Ce test de mesure de viscosité réduite en solution est, de par le choix des solvants et de la concentration des polymères utilisés, parfaitement adapté pour déterminer la viscosité du polymère visqueux préparé selon le procédé décrit ci-après.

Le caractère semi-cristallin des polyesters thermoplastiques utilisés selon la présente invention se caractérise lorsque que ces derniers, après un traitement thermique de 16h à 170°C, présentent des raies de diffraction aux rayons X ou un pic de fusion endothermique en Analyse Calorimétrique Différentielle à Balayage (DSC).

Le polyester thermoplastique semi-cristallin tel que précédemment défini présente bien des avantages pour la fabrication de fibres.

En effet, grâce notamment au ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A) d'au moins 0,1 et d'au plus 0,30 et à une viscosité réduite en solution supérieure à 50 mL/g et de préférence inférieure à 120 mL/g, les polyesters thermoplastiques semi-cristallin permettent de fabriquer des fibres présentant une meilleure tenue thermique et des propriétés mécaniques améliorées comparativement par exemple à des fibres fabriqués à partir de polyéthylène isosorbide téréphtalate (PEIT) classiques.

Les fibres selon l'invention peuvent être directement fabriquées à partir de l'état fondu après polymérisation du polyester thermoplastique semi-cristallin.

Selon une alternative, le polyester thermoplastique semi-cristallin peut être conditionné sous une forme facilement manipulable telle que des pellets ou des granulés avant d'être utilisé pour la fabrication de fibres. D'une manière préférentielle, le polyester thermoplastique semi-cristallin est conditionné sous forme de granulés, lesdits granulés étant avantageusement séchés avant la transformation sous forme de fibres. Le séchage est réalisé de manière à obtenir des granulés présentant un taux d'humidité résiduelle inférieur à 300 ppm, préférentiellement inférieur à 200 ppm comme par exemple environ 180 ppm. Les fibres fabriquées peuvent être mono-filaments ou multi-filaments.

Les fibres fabriquées à partir du polyester thermoplastique semi-cristallin selon l'invention peuvent être obtenues par les méthodes connues de l'homme du métier comme par exemple le filage par voie fondue ou par des procédés en solutions (voie humide ou voie sèche). D'une manière préférentielle, les fibres sont fabriquées par la méthode du filage en voie fondue.

La fabrication de fibres par la méthode de filage en voie fondue consiste d'abord à fondre le polyester dans une extrudeuse. La matière fondue est ensuite envoyée sous pression au travers d'une filière constituée d'une multitude de trous. En sortie de filière, les filaments sont refroidis par air, étirés et bobinés. Généralement un produit d'ensimage est appliqué à la partie basse de la cheminé de filage.

Selon un mode de réalisation particulier, le polyester thermoplastique semi-cristallin précédemment défini est utilisé en combinaison avec un ou plusieurs polymères additionnels pour la fabrication de fibres.

Le polymère additionnel peut être choisi parmi les polyamides, les polyesters autres que le polyester selon l'invention, le polystyrène, les copolymères de styrène, les copolymères styrène-acrylonitrile, les copolymères styrène-acrylonitrile-butadiène, les polyméthacrylates de méthyle, les copolymères acryliques, les poly(éther-imides), les polyoxyde de phénylène tels que le polyoxyde de (2,6-diméthylphenylène), les polysulfate de phénylène, les poly (ester-carbonates), les polycarbonates, les polysulfones, les polysulfone ethers, les polyéther cétone et les mélanges de ces polymères.

Le polymère additionnel peut également être un polymère permettant d'améliorer les propriétés au choc du polymère, notamment les polyoléfines fonctionnelles telles que les polymères et copolymères d'éthylène ou de propylène fonctionnalisés, des copolymères cœur-écorce ou des copolymères à bloc.

Un ou plusieurs additifs peuvent être ajoutés lors de la fabrication de la fibre à partir du polyester thermoplastique semi-cristallin afin de lui conférer des propriétés particulières.

Ainsi, à titre d'exemple d'additif, on peut citer les charges ou les fibres de nature organique ou inorganique, nanométriques ou non, fonctionnalisées ou non. Il peut s'agir de silices, de zéolithes, de fibres ou de billes de verre, d'argiles, de mica, de titanates, de silicates, de graphite, de carbonate de calcium, de nanotubes de carbone, de fibres de bois, de fibres de carbone, de fibres de polymère, de protéines, de fibres cellulosiques, de fibres ligno-cellulosiques et d'amidon granulaire non déstructuré. Ces charges ou fibres peuvent permettre d'améliorer la dureté, la rigidité ou la perméabilité à l'eau ou aux gaz.

L'additif peut également être choisi parmi des agents opacifiants, des colorants et des pigments. Ils peuvent être choisis parmi l'acétate de cobalt et les composés suivants : HS-325 Sandoplast^{®} RED BB (qui est un composé porteur d'une fonction azo également connu sous le nom Solvent Red 195), HS-510 Sandoplast^{®} Blue 2B qui est une anthraquinone, Polysynthren^{®} Blue R, et Clariant^{®} RSB Violet.

L'additif peut être également un agent de résistance aux UV comme par exemple des molécules type benzophénone ou benzotriazole, comme la gamme Tinuvin^{™} de BASF : tinuvin 326, tinuvin P ou le tinuvin 234 par exemple ou des amines encombrées comme la gamme Chimassorb^{™} de BASF : Chimassorb 2020, Chimasorb 81 ou Chimassorb 944 par exemple.

L'additif peut également être un agent ignifuge ou retardateur de flamme, comme par exemple des dérivés halogénés ou des retardateurs de flamme non halogénés (par exemple des dérivés phosphorés, tels que les Exolit^{®} OP) ou comme la gamme des cyanurates mélaminés (par exemple les melapur^{™} : mélapur 200) ou encore des hydroxydes d'aluminium ou de magnésium.

L'utilisation selon la présente invention de polyester thermoplastique semi-cristallin pour la fabrication de fibres est particulièrement avantageuse.

En effet, les fibres ainsi fabriquées à partir de polyester thermoplastique semi-cristallin tel que précédemment décrit, avec notamment un ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A) d'au moins 0,1 et d'au plus 0,30 et une viscosité réduite en solution supérieure à 50 mL/g, présentent des propriétés remarquables, à la fois du point de vue des propriétés mécaniques que des propriétés thermiques.

En effet, les fibres fabriquées selon l'invention, qui peuvent être mono-filament ou multi-filament, présentent une amélioration des propriétés mécaniques telles que l'allongement à la rupture ou encore la ténacité et trouvent ainsi une application toute particulière pour l'obtention de fibres étirées, d'assemblages non tissés, de textiles ou des géotextiles tissés ou encore de cordes pour différentes applications comme les renforts de pneumatiques ainsi que les cordes et fibres expansibles et techniques.

Un second objet de l'invention concerne un procédé de fabrication de fibre, ledit procédé comprenant les étapes suivantes de:
- Fourniture d'un polyester thermoplastique semi-cristallin tel que défini ci-dessous.
- Préparation de ladite fibre à partir du polyester thermoplastique semi-cristallin obtenu à l'étape précédente.

L'étape de préparation peut être réalisée par les méthodes connues de l'homme du métier qui sont classiquement mises en œuvre pour la fabrication de fibres.

Ainsi à titre d'exemple, l'étape de préparation peut être réalisée par la méthode du filage par voie fondue ou par des procédés en solutions (voie humide ou voie sèche). D'une manière préférentielle, l'étape de préparation est réalisée par la méthode du filage en voie fondue.

Un troisième objet de l'invention concerne une fibre comprenant le polyester thermoplastique semi-cristallin décrit ci-dessus. La fibre selon l'invention peut également comprendre un polymère additionnel et/ou un ou plusieurs additifs tels que définis ci-dessus.

Les fibres selon l'invention peuvent être soumises à un ou plusieurs traitements additionnels.

Ainsi, les fibres peuvent être utilisées pour la fabrication de textiles et de non tissés. Les textiles peuvent notamment être obtenus par tissage ou tricotage.

Un non-tissé est un produit manufacturé constitué d'un voile, d'une toile, d'une nappe, d'un matelas de fibres réparties directionnellement ou par hasard et dont la cohésion interne est assurée par des méthodes mécaniques, physiques ou chimiques ou encore par une combinaison de ces méthodes. Un exemple de cohésion interne peut être le collage et aboutit à l'obtention d'une toile non-tissée, ladite toile non-tissée pouvant ensuite être mise sous la forme d'un mat de fibres.

Les fibres peuvent être transformées en non-tissé selon les techniques connues de l'homme du métier comme la voie sèche, la voie fondue, la voie humide ou le filage éclair (en anglais « *flash spinning* »).

A titre d'exemple, la formation du non-tissé par voie sèche peut notamment être réalisée par calandrage ou par un procédé aérodynamique (en anglais « *Airlaid* »). Concernant l'obtention en voie fondue, elle peut être réalisée par extrusion (en anglais « spinbonding technology » ou « spunbonded fabric ») ou par extrusion soufflage (en anglais « melt-blown »).

Le polyester thermoplastique semi-cristallin particulièrement adapté pour la fabrication de fibres peut être préparé par un procédé de synthèse comprenant :
- une étape d'introduction dans un réacteur de monomères comprenant au moins un 1,4 : 3,6-dianhydrohexitol (A), au moins un diol alicyclique (B) autre que les 1,4 : 3,6-dianhydrohexitols (A) et au moins un acide téréphtalique (C), le ratio molaire ((A)+(B))/(C) allant de 1,05 à 1,5, lesdits monomères étant exempts de diol aliphatique non cyclique ou comprenant, par rapport à la totalité des monomères introduits, une quantité molaire de motifs diol aliphatique non cyclique inférieure à 1% ;
- une étape d'introduction dans le réacteur d'un système catalytique ;
- une étape de polymérisation desdits monomères pour former le polyester, ladite étape consistant en :
   ▪ un premier stade d'oligomérisation pendant lequel le milieu réactionnel est agité sous atmosphère inerte à une température allant de 265 à 280 °C, avantageusement de 270 à 280°C, par exemple 275 °C ;
   ▪ un second stade de condensation des oligomères pendant lequel les oligomères formés sont agités sous vide à une température allant de 278 à 300°C afin de former le polyester, avantageusement de 280 à 290 °C, par exemple 285 °C ;
- une étape de récupération du polyester thermoplastique semi-cristallin.

Ce premier stade du procédé se fait en atmosphère inerte, c'est-à-dire sous atmosphère d'au moins un gaz inerte. Ce gaz inerte peut notamment être du diazote. Ce premier stade peut se faire sous flux de gaz et il peut également se faire sous pression, par exemple à une pression comprise entre 1,05 et 8 bars.

De préférence, la pression va de 3 à 8 bars, tout préférentiellement de 5 à 7,5 bars, par exemple 6,6 bars. Dans ces conditions de pression préférées, on favorise la réaction de l'ensemble des monomères entre eux en limitant la perte de monomères lors de ce stade. Préalablement au premier stade d'oligomérisation, une étape de désoxygénation des monomères est préférentiellement réalisée. Elle peut se faire par exemple une fois les monomères introduits dans le réacteur, en réalisant un vide puis en y introduisant un gaz inerte tel que l'azote. Ce cycle vide-introduction de gaz inerte peut être répété à plusieurs reprises, par exemple de 3 à 5 fois. De préférence, ce cycle vide-azote est réalisé à une température entre 60 et 80°C afin que les réactifs, et notamment les diols, soient totalement fondus. Cette étape de désoxygénation présente l'avantage d'améliorer les propriétés de coloration du polyester obtenu à la fin du procédé.

Le second stade de condensation des oligomères se fait sous vide. La pression peut diminuer au cours de ce second stade de manière continue en utilisant des rampes de baisse de pression, par paliers ou encore en utilisant une combinaison de rampes de baisse de pression et de paliers. De préférence, à la fin de ce second stade, la pression est inférieure à 10 mbar, tout préférentiellement inférieure à 1 mbar.

Le premier stade de l'étape de polymérisation a de préférence une durée allant de 20 minutes à 5 heures. Avantageusement, le second stade a une durée allant de 30 minutes à 6 heures, le début de ce stade consistant au moment où le réacteur est placé sous vide, c'est-à-dire à une pression inférieure à 1 bar.

Le procédé comprend en outre une étape d'introduction dans le réacteur d'un système catalytique. Cette étape peut se dérouler préalablement ou pendant l'étape de polymérisation décrite précédemment.

On entend par système catalytique, un catalyseur ou un mélange de catalyseurs, éventuellement dispersé(s) ou fixé(s) sur un support inerte.

Le catalyseur est utilisé dans des quantités adaptées pour obtenir un polymère de haute viscosité conformément à l'utilisation selon l'invention pour la fabrication de fibres.

On utilise avantageusement, lors du stade d'oligomérisation, un catalyseur d'estérification. Ce catalyseur d'estérification peut être choisi parmi les dérivés d'étain, de titane, de zirconium, d'hafnium, de zinc, de manganèse, de calcium, de strontium, des catalyseurs organiques comme l'acide para-toluène sulfonique (APTS), l'acide méthane sulfonique (AMS) ou un mélange de ces catalyseurs. A titre d'exemple de tels composés, on peut citer ceux donnés dans la demande US 2011/282020 A1, aux paragraphes [0026] à [0029], et à la page 5 de la demande WO 2013/062408 A1.

De préférence, on utilise lors du premier stade de transestérification, un dérivé de zinc, ou un dérivé de manganèse d'étain ou de germanium.

A titre d'exemple de quantités massiques, on peut utiliser de 10 à 500 ppm de métal contenu dans le système catalytique lors du stade d'oligomérisation, par rapport à la quantité de monomères introduits.

En fin de transestérification, le catalyseur de la première étape peut être optionnellement bloqué par l'ajout d'acide phosphoreux ou d'acide phosphorique, ou alors comme dans le cas de l'étain (IV) réduit par des phosphites tels que le phosphite de triphenyle ou les phosphite des tris(nonylephenyle) ou ceux cités au paragraphe [0034] de la demande US 2011/282020 A1.

Le second stade de condensation des oligomères peut optionnellement être réalisé avec l'ajout d'un catalyseur. Ce catalyseur est avantageusement choisi parmi les dérivés d'étain, préférentiellement d'étain, de titane, de zirconium, de germanium, d'antimoine, de bismuth, d'hafnium, de magnésium, de cérium, de zinc, de cobalt, de fer, de manganèse, de calcium, de strontium, de sodium, de potassium, d'aluminium, de lithium ou d'un mélange de ces catalyseurs. Des exemples de tels composés peuvent être par exemple ceux donnés dans le brevet EP 1 882 712 B1 aux paragraphes [0090] à [0094].

De préférence, le catalyseur est un dérivé d'étain, de titane, de germanium, d'aluminium ou d'antimoine, et tout préférentiellement l'étain ou le germanium.

A titre d'exemple de quantités massiques, on peut utiliser de 10 à 500 ppm de métal contenu dans le système catalytique lors du stade de condensation des oligomères, par rapport à la quantité de monomères introduits.

Tout préférentiellement, on utilise un système catalytique lors du premier stade et du second stade de polymérisation. Ledit système est avantageusement constitué d'un catalyseur à base d'étain ou d'un mélange de catalyseurs à base d'étain, de titane, de germanium et d'aluminium.

A titre d'exemple, on peut utiliser une quantité massique de 10 à 500 ppm de métal contenu dans le système catalytique, par rapport à la quantité de monomères introduits.

Selon le procédé de préparation, on utilise avantageusement un anti-oxydant lors de l'étape de polymérisation des monomères. Ces anti-oxydants permettent de réduire la coloration du polyester obtenu. Les anti-oxydants peuvent être des anti-oxydants primaires et/ou secondaires. L'anti-oxydant primaire peut être un phénol encombré stériquement tels que les composés Hostanox^{®} 0 3, Hostanox^{®} 0 10, Hostanox^{®} 0 16, Ultranox^{®} 210, Ultranox^{®}276, Dovernox^{®} 10, Dovernox^{®} 76, Dovernox^{®} 3114, Irganox^{®} 1010, Irganox^{®} 1076 ou un phosphonate tel que l'Irgamod^{®} 195. L'anti-oxydant secondaire peut être des composés phosphorés trivalents tels que Ultranox^{®} 626, Doverphos^{®} S-9228, Hostanox^{®} P-EPQ, ou l'Irgafos 168.

Il est également possible d'introduire, comme additif de polymérisation dans le réacteur, au moins un composé susceptible de limiter les réactions parasites d'éthérification tel que l'acétate de sodium, le tétraméthylammonium hydroxyde ou le tétraéthylammonium hydroxyde.

Enfin, le procédé comprend une étape de récupération du polyester à l'issue de l'étape de polymérisation. Le polyester thermoplastique semi-cristallin ainsi récupéré peut ensuite être mis en forme tel que décrit précédemment.

Selon une variante du procédé de synthèse, une étape d'augmentation de masse molaire est réalisée après l'étape de récupération du polyester thermoplastique semi-cristallin.

L'étape d'augmentation de masse molaire est réalisée par post-polymérisation et peut consister en une étape de polycondensation à l'état solide (PCS) du polyester thermoplastique semi-cristallin ou en une étape d'extrusion réactive du polyester thermoplastique semi-cristallin en présence d'au moins un allongeur de chaîne.

Ainsi, selon une première variante du procédé de fabrication, l'étape de post-polymérisation est réalisée par PCS.

La PCS est généralement réalisée à une température comprise entre la température de transition vitreuse et la température de fusion du polymère. Ainsi, pour réaliser la PCS, il est nécessaire que le polymère soit semi-cristallin. De préférence, ce dernier présente une chaleur de fusion supérieure à 10 J/g, de préférence supérieure à 20 J/g, la mesure de cette chaleur de fusion consistant à faire subir à un échantillon de ce polymère de viscosité réduite en solution plus faible un traitement thermique à 170 °C pendant 16 heures puis à évaluer la chaleur de fusion par DSC en chauffant l'échantillon à 10 K/min.

Avantageusement, l'étape de PCS est réalisée à une température allant de 190 à 280°C, de préférence allant de 200 à 250 °C, cette étape devant impérativement être réalisée à une température inférieure à la température de fusion du polyester thermoplastique semi-cristallin.

L'étape de PCS peut se faire en atmosphère en inerte, par exemple sous azote ou sous argon ou sous vide.

Selon une deuxième variante du procédé de fabrication, l'étape de post-polymérisation est réalisée par extrusion réactive du polyester thermoplastique semi-cristallin en présence d'au moins un allongeur de chaîne.

L'allongeur de chaîne est un composé comprenant deux fonctions susceptibles de réagir, en extrusion réactive, avec des fonctions, alcool, acide carboxylique et/ou ester d'acide carboxylique du polyester thermoplastique semi-cristallin. L'allongeur de chaîne peut par exemple être choisi parmi les composés comprenant deux fonctions isocyanate, isocyanurate, lactame, lactone, carbonate, époxy, oxazoline et imide, lesdites fonctions pouvant être identiques ou différentes. L'allongement de chaîne du polyester thermoplastique peut être effectué dans tous les réacteurs aptes à mélanger un milieu très visqueux avec une agitation suffisamment dispersive pour assurer une bonne interface entre la matière fondue et le ciel gazeux du réacteur. Un réacteur particulièrement adapté à cette étape de traitement est l'extrusion.

L'extrusion réactive peut être réalisée dans une extrudeuse de tout type, notamment une extrudeuse mono-vis, une extrudeuse bi-vis co-rotatives ou une extrudeuse bi-vis contrarotatives. Toutefois, on préfère réaliser cette extrusion réactive en utilisant une extrudeuse co-rotative.

L'étape d'extrusion réactive peut se faire en :
- introduisant le polymère dans l'extrudeuse de manière à faire fondre ledit polymère ;
- puis introduisant dans le polymère fondu l'allongeur de chaîne ;
- puis faisant réagir dans l'extrudeuse le polymère avec l'allongeur de chaîne ;
- puis récupérant le polyester thermoplastique semi-cristallin obtenu à l'étape d'extrusion.

Lors de l'extrusion, la température à l'intérieur de l'extrudeuse est réglée de manière à être à supérieure à la température de fusion du polymère. La température à l'intérieur de l'extrudeuse peut aller de 150 à 320 °C.

Le polyester thermoplastique semi-cristallin obtenu après l'étape d'augmentation de masse molaire est récupéré puis mis en forme tel que décrit précédemment.

L'invention sera mieux comprise à l'aide des exemples et figures ci-après qui se veulent purement illustratifs et ne limitent en rien la portée de la protection.

### Exemples

Les propriétés des polymères ont été étudiées avec les techniques suivantes :

### Viscosité réduite en solution

La viscosité réduite en solution est évaluée à l'aide d'un viscosimètre capillaire Ubbelohde à 25 °C dans un mélange équimassique de phénol et d'ortho-dichlorobenzène après dissolution du polymère à 130°C sous agitation, la concentration de polymère introduit étant de 5g/L.

### DSC

Les propriétés thermiques des polyesters ont été mesurées par calorimétrie différentielle à balayage (DSC) : L'échantillon est tout d'abord chauffé sous atmosphère d'azote dans un creuset ouvert de 10 à 320 °C (10 °C.min-1), refroidi à 10 °C (10 °C.min-1), puis réchauffé à 320 °C dans les mêmes conditions que la première étape. Les températures de transition vitreuse ont été prises au point médian (en anglais mid-point) du second chauffage. Les températures de fusion éventuelles sont déterminées sur le pic endothermique (début du pic (en anglais, onset)) au premier chauffage.

De même la détermination de l'enthalpie de fusion (aire sous la courbe) est réalisée au premier chauffage.

Pour les exemples illustratifs présentés ci-dessous les réactifs suivants ont été utilisés :
1,4-Cyclohexane dimethanol (pureté 99%, mélange d'isomères cis et trans)
Isosorbide (pureté >99,5%) Polysorb^{®} P de Roquette Frères
Acide téréphtalique (pureté 99+%) de Acros
Irganox^{®} 1010 de BASF AG
Dibutylétain oxyde (pureté 98%) de Sigma Aldrich

### Exemple 1: Préparation d'un polyester thermoplastique semi-cristallin et utilisation pour la fabrication de fibre.

### A : polymérisation

Deux polyesters thermoplastiques **P1** et **P2** ont été préparés.

Le premier polyester thermoplastique **P1** est un polyester thermoplastique semi-cristallin préparé selon le mode opératoire ci-après, pour une utilisation selon l'invention avec notamment un ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A) d'au moins 0,05 et d'au plus 0,30.

Ainsi, dans un réacteur de 7,5L sont ajoutés 1432 g (9,9 mol) de 1,4-cyclohexanedimethanol, 484 g (3,3 mol) d'isosorbide, 2000 g (12,0 mol) d'acide téréphtalique, 1,65 g d'Irganox 1010 (anti-oxydant) et 1,39 g de dibutylétainoxyde (catalyseur). Pour extraire l'oxygène résiduel des cristaux d'isosorbide, 4 cycles vide-azote sont effectués une fois la température du milieu réactionnel comprise entre 60 et 80 °C.

Le mélange réactionnel est ensuite chauffé à 275 °C (4 °C/min) sous 6,6 bars de pression et sous agitation constante (150 tr/min) jusqu'à obtenir un taux d'estérification de 87%. Le taux d'estérification étant estimé à partir de la masse de distillat collectée. Puis, la pression est réduite à 0,7 mbar en 90 minutes selon une rampe logarithmique et la température amenée à 285 °C.

Ces conditions de vide et de température ont été maintenues jusqu'à obtenir une augmentation de couple de 12,1 Nm par rapport au couple initial.

Enfin, un jonc de polymère est coulé par la vanne de fond du réacteur, refroidi dans un bac d'eau thermo-régulé à 15 °C et découpé sous forme de granulés d'environ 15 mg.

La résine ainsi obtenue a une viscosité réduite en solution de 80,1 mL/g⁻¹.

L'analyse par RMN ¹H du polyester montre que le polyester final contient 17,0 mol% d'isosorbide par rapport aux diols.

En ce qui concerne les propriétés thermiques, le polymère présente une température de transition vitreuse de 96 °C, une température de fusion de 253 °C avec une enthalpie de fusion de 23,2J/g.

Une étape de post condensation en phase solide a été réalisée sur 10 kg de ces granulés durant 20h à 210 °C sous flux d'azote (1500 l/h) pour augmenter la masse molaire. La résine après condensation en phase solide présente une viscosité réduite en solution de 103.4 mL.g-1.

Un second polyester thermoplastique **P2** a été préparé selon le même mode opératoire que le polyester **P1.**

Ce second polyester **P2** est un polyester servant de comparatif est présente ainsi un ratio molaire (A)/[(A)+(B)] de 0,44. Les quantités des composés utilisés sont détaillées dans le tableau 1 ci-dessous :

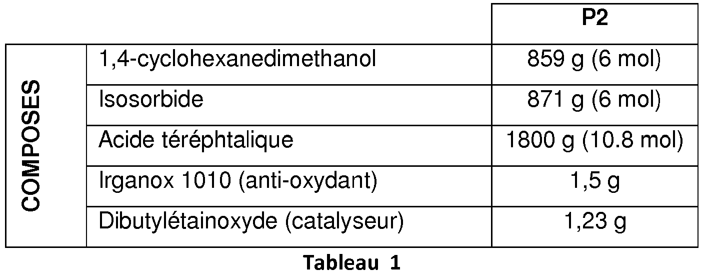

La résine ainsi obtenue avec le polyester P2 a une viscosité réduite en solution de 54.9 mL/g.

L'analyse par RMN 1H du polyester montre que le polyester final contient 44 mol% d'isosorbide par rapport aux diols. En ce qui concerne les propriétés thermiques, le polymère présente une température de transition vitreuse de 125°C.

Après analyse, le polyester **P2** n'est pas caractérisé par la présence de raies de diffraction aux rayons X ainsi que par la présence d'un pic de fusion endothermique en Analyse Calorimétrique Différentielle à Balayage (DSC), même après un traitement thermique pendant 16h à 170°C. Le polyester **P2** n'a donc pas de caractère cristallin.

### B : Mise en forme

Les granulés de polyester **P1** et **P2** obtenus à l'étape A de polymérisation sont séchés à 140 °C sous azote afin d'atteindre un taux d'humidité résiduelle des granulés inférieur à 300 ppm et notamment 105 ppm.

Les granulés sont alors introduits dans une extrudeuse présentant 5 zones de chauffe : 300 °C pour la zone d'introduction des granulés, 295 °C en zone 2, 290 °C en zone 3, 285 °C en zone 4, 280 °C en zone 5 et 278 °C dans le tube, dans la pompe d'entrainement de la matière et dans le filtre pour éliminer les gels et la tête de filage (dans le sens de circulation du flux de matière fondue).

Selon cet exemple, la tête de filage comporte 10 trous avec un débit réglé de manière à avoir un débit de matière par trou de 1.5 g/minute avec un diamètre de capillaire de 0,5 mm et une vitesse d'entrainement de 2000 m/minute. La tête utilisée permet de mettre en forme des mono ou des multi-filaments.

En sortie de la tête de filage, un courant d'air à 25 °C vient refroidir les différents filaments qui sont rassemblées au point de convergence puis enroulés au moyen d'un bobinoir.

### Exemple 2 : Test comparatif des propriétés mécaniques

Les fibres obtenus avec les polyesters **P1** et **P2** présentent des caractéristiques différentes.

En effet, un filament filé dans les conditions ci-dessus à partir du polyester thermoplastique semi-cristallin **P1** contenant 17% d'isosorbide est étiré avec un ratio d'étirage de 7 et présente une élongation à la rupture de 7+/- 2%. De plus les fibres obtenues avec le polyester **P1** présentent une bonne résistance.

A l'inverse, un filament filé dans les conditions ci-dessus à partir du polyester thermoplastique semi-cristallin **P2** ne peut pas être étiré avec un ratio d'étirage supérieur à 1,05 à cause de sa fragilité. Le polyester **P2** n'est donc absolument pas avantageux pour une utilisation dans la fabrication de fibres.

Ceci conforte d'autant plus que le polyester thermoplastique semi-cristallin selon l'invention, présentant notamment ratio molaire ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A) d'au moins 0,1 et d'au plus 0,30 et étant exempt d'éthylène glycol est particulièrement adapté pour une utilisation dans la fabrication de fibres, lesdites fibres, de par leurs propriétés mécaniques, trouvent des applications avantageuses dans des domaines industriels tel que le textile.

## Revendications

1. Utilisation d'un polyester thermoplastique semi-cristallin pour la fabrication de fibres, ledit polyester comprenant :
• au moins un motif 1,4 : 3,6-dianhydrohexitol (A) ;
• au moins un motif diol alicyclique (B) autre que les motifs 1,4 : 3,6-dianhydrohexitol (A) ;
• au moins un motif acide téréphtalique (C) ;
dans lequel le ratio molaire (A)/[(A)+(B)] étant d'au moins 0,1 et d'au plus 0,30 ;
ledit polyester étant exempt de motifs diol aliphatique non cyclique ou comprenant une quantité molaire de motifs diol aliphatique non cyclique, par rapport à la totalité des motifs monomériques du polyester, inférieure à 1%, et dont la viscosité réduite en solution (25°C ; phénol (50%m) : ortho-dichlorobenzène (50%m) ; 5 g/L de polyester) est supérieure à 50 mL/g.

2. Fibre comprenant un polyester thermoplastique semi-cristallin comprenant :
• au moins un motif 1,4 : 3,6-dianhydrohexitol (A) ;
• au moins un motif diol alicyclique (B) autre que les motifs 1,4 : 3,6-dianhydrohexitol (A) ;
• au moins un motif acide téréphtalique (C) ;
dans lequel le ratio molaire (A)/[(A)+(B)] étant d'au moins 0,1 et d'au plus 0,30 ;
ledit polyester étant exempt de motifs diol aliphatique non cyclique ou comprenant une quantité molaire de motifs diol aliphatique non cyclique, par rapport à la totalité des motifs monomériques du polyester, inférieure à 1%, et dont la viscosité réduite en solution (25°C ; phénol (50%m) : ortho-dichlorobenzène (50%m) ; 5 g/L de polyester) est supérieure à 50 mL/g.

3. Procédé de fabrication de fibre comprenant les étapes suivantes de :
• Fourniture d'un polyester thermoplastique semi-cristallin comprenant au moins un motif 1,4 : 3,6-dianhydrohexitol (A), au moins un motif diol alicyclique (B) autre que les motifs 1,4 : 3,6-dianhydrohexitol (A), au moins un motif acide téréphtalique (C), dans lequel le ratio molaire (A)/[(A)+(B)] étant d'au moins 0,1 et d'au plus 0,30, ledit polyester étant exempt de motifs diol aliphatique non cyclique ou comprenant une quantité molaire de motifs diol aliphatique non cyclique, par rapport à la totalité des motifs monomériques du polyester, inférieure à 1%, et dont la viscosité réduite en solution (25°C ; phénol (50%m) : ortho-dichlorobenzène (50%m) ; 5 g/L de polyester) est supérieure à 50 mL/g.
• Préparation de ladite fibre à partir du polyester thermoplastique semi-cristallin obtenu à l'étape précédente.

4. Procédé de fabrication selon la revendication 3, **caractérisé en ce que** l'étape de préparation est réalisée par la méthode du filage par voie fondue ou par des procédés en solutions voie humide ou voie sèche.

5. Utilisation selon la revendication 1, fibre selon la revendication 2 ou procédé de fabrication selon l'une des revendications 3 ou 4, **caractérisé en ce que** le diol alicyclique (B) est un diol choisi parmi le 1,4-cyclohexanedimethanol, le 1,2-cyclohexanedimethanol, le 1,3-cyclohexanedimethanol ou un mélange de ces diols, très préférentiellement le 1,4-cyclohexanedimethanol.

6. Utilisation selon l'une des revendications 1 ou 5, fibre selon la revendication 2 ou 5, ou procédé de fabrication selon l'une quelconque des revendications 3 à 5, **caractérisé en ce que** le 1,4 : 3,6-dianhydrohexitol (A) est l'isosorbide.

7. Utilisation selon l'une des revendications 1 et 5 à 6, fibre selon l'une des revendications 2 et 5 à 6, ou procédé de fabrication selon l'une des revendications 3 à 6, **caractérisé en ce que** la fibre comprend un ou plusieurs polymères additionnels et/ou un ou plusieurs additifs.

8. Utilisation d'une fibre selon l'une des revendications 5 à 6, pour la fabrication d'un textile.

9. Utilisation d'une fibre selon l'une des revendications 5 à 6, pour la fabrication d'un non-tissé.

## Patentansprüche

1. Verwendung eines teilkristallinen thermoplastischen Polyesters zur Herstellung von Fasern, wobei der Polyester umfasst:
• wenigstens eine 1,4:3,6-Dianhydrohexitol-Einheit (A);
• wenigstens eine alicyclische Diol-Einheit (B), die sich von den 1,4:3,6-Dianhydrohexitol-Einheiten (A) unterscheidet;
• wenigstens eine Terephthalsäureeinheit (C);
wobei das Molverhältnis (A)/[(A)+(B)] wenigstens 0,1 und höchstens 0,30 beträgt; wobei der Polyester frei von nichtcyclischen aliphatischen Diol-Einheiten ist oder eine molare Menge an nichtcyclischen aliphatischen Diol-Einheiten, bezogen auf die Gesamtmenge an Monomereinheiten des Polyesters, von weniger als 1 % enthält und dessen reduzierte Viskosität in Lösung (25 °C; Phenol (50 % m): orthoDichlorbenzol (50 % m); 5 g/l Polyester) über 50 ml/g beträgt.

2. Faser, die ein teilkristallines thermoplastisches Polyester umfasst, das Folgendes umfassend:
• wenigstens eine 1,4:3,6-Dianhydrohexitol-Einheit (A);
• wenigstens eine alicyclische Diol-Einheit (B), die sich von den 1,4:3,6-Dianhydrohexitol-Einheiten (A) unterscheidet;
• wenigstens eine Terephthalsäureeinheit (C);
wobei das Molverhältnis (A)/[(A)+(B)] wenigstens 0,1 und höchstens 0,30 beträgt; wobei der Polyester frei von nichtcyclischen aliphatischen Diol-Einheiten ist oder eine molare Menge an nichtcyclischen aliphatischen Diol-Einheiten, bezogen auf die Gesamtmenge an Monomereinheiten des Polyesters, von weniger als 1 % enthält und dessen reduzierte Viskosität in Lösung (25 °C; Phenol (50 % m): Orthodichlorbenzol (50 % m); 5 g/l Polyester) über 50 ml/g beträgt.

3. Verfahren zur Herstellung einer Faser, umfassend die folgenden Schritte:
• Bereitstellen eines teilkristallinen thermoplastischen Polyesters, umfassend wenigstens eine 1,4:3,6-Dianhydrohexitol-Einheit (A), wenigstens eine alicyclische Diol-Einheit (B), die sich von den 1,4:3,6-Dianhydrohexitol-Einheiten (A) unterscheidet, wenigstens eine Terephthalsäure-Einheit (C), wobei das Molverhältnis (A)/[(A)+(B)] wenigstens 0,1 und höchstens 0,30 beträgt, wobei das Polyester frei von nichtcyclischen aliphatischen Diol-Einheiten ist oder eine molare Menge an nichtcyclischen aliphatischen Diol-Einheiten, bezogen auf die Gesamtmenge an Monomereinheiten des Polyesters, von weniger als 1 % enthält und dessen reduzierte Viskosität in Lösung (25 °C; Phenol (50 % m): Orthodichlorbenzol (50 % m); 5 g/l Polyester) über 50 ml/g beträgt.
• Herstellung einer Faser aus dem im vorherigen Schritt erhaltenen teilkristallinen thermoplastischen Polyester.

4. Herstellungsverfahren nach Anspruch 3, **dadurch gekennzeichnet, dass** der Herstellungsschritt durch das Schmelzspinnenverfahren oder durch Nass- oder Trockenverfahren durchgeführt wird.

5. Verwendung nach Anspruch 1, Faser nach Anspruch 2 oder Herstellungsverfahren nach einem der Ansprüche 3 oder 4, **dadurch gekennzeichnet, dass** das alicyklische Diol (B) ein Diol ist, das aus 1,4-Cyclohexandimethanol, 1,2-Cyclohexandimethanol, 1,3-Cyclohexandimethanol oder einer Mischung dieser Diole, vorzugsweise 1,4-Cyclohexandimethanol ist.

6. Verwendung nach einem der Ansprüche 1 oder 5, Faser nach Anspruch 2 oder 5 oder Herstellungsverfahren nach einem der Ansprüche 3 bis 5, **dadurch gekennzeichnet, dass** das 1,4:3,6-Dianhydrohexitol (A) Isosorbid ist.

7. Verwendung nach einem der Ansprüche 1 und 5 bis 6, Faser nach einem der Ansprüche 2 und 5 bis 6 oder Herstellungsverfahren nach einem der Ansprüche 3 bis 6, **dadurch gekennzeichnet, dass** die Faser ein oder mehrere zusätzliche Polymere und/oder ein oder mehrere Additive umfasst.

8. Verwendung einer Faser nach einem der Ansprüche 5 bis 6 zur Herstellung eines Textils.

9. Verwendung einer Faser nach einem der Ansprüche 5 bis 6 zur Herstellung eines Vliesstoffs.

## Claims

1. A use of a semi-crystalline thermoplastic polyester for the manufacture of fibres, said polyester comprising:
• at least one 1,4: 3,6-dianhydrohexitol unit (A);
• at least one alicyclic diol unit (B) other than 1,4: 3,6-dianhydrohexitol units (A);
• at least one terephthalic acid unit (C);
wherein the (A)/[(A)+(B)] molar ratio is at least 0.1 and at most 0.30;
said polyester being free from non-cyclic aliphatic diol units or comprising a molar amount of non-cyclic aliphatic diol units, relative to the total monomeric units of the polyester, of less than 1%, and having a reduced viscosity in solution (25°C; phenol (50 wt%): ortho-dichlorobenzene (50 wt%); 5 g/L of polyester) greater than 50 mL/g.

2. A fibre comprising a semi-crystalline thermoplastic polyester comprising:
• at least one 1,4: 3,6-dianhydrohexitol unit (A);
• at least one alicyclic diol unit (B) other than 1,4: 3,6-dianhydrohexitol units (A);
• at least one terephthalic acid unit (C);
wherein the (A)/[(A)+(B)] molar ratio is at least 0.1 and at most 0.30;
said polyester being free from non-cyclic aliphatic diol units or comprising a molar amount of non-cyclic aliphatic diol units, relative to the total monomeric units of the polyester, of less than 1%, and having a reduced viscosity in solution (25°C; phenol (50 wt%): ortho-dichlorobenzene (50 wt%); 5 g/L of polyester) greater than 50 mL/g.

3. A fibre manufacturing method comprising the following steps of:
• Providing a semi-crystalline thermoplastic polyester comprising at least one 1,4: 3,6-dianhydrohexitol unit (A), at least one alicyclic diol unit (B) other than 1,4: 3,6-dianhydrohexitol units (A), at least one terephthalic acid unit (C), wherein the (A)/[(A)+(B)] molar ratio is at least 0.1 and at most 0.30, said polyester being free of non-cyclic aliphatic diol units or comprising a molar amount of non-cyclic aliphatic diol units, relative to the total monomeric units of the polyester, less than 1%, and having a reduced viscosity in solution (25°C; phenol (50 wt%): ortho-dichlorobenzene (50 wt%); 5 g/L polyester) is greater than 50 mL/g.
• Preparing said fibre from the semi-crystalline thermoplastic polyester obtained in the previous step.

4. The manufacturing method according to claim 3, **characterised in that** the preparation step is carried out using the melt spinning method or by wet or dry solution processes.

5. The use according to claim 1, the fibre according to claim 2 or the manufacturing method according to one of claims 3 or 4, **characterised in that** the alicyclic diol (B) is a diol chosen from 1,4-cyclohexanedimethanol, 1,2-cyclohexanedimethanol, 1,3-cyclohexanedimethanol or a mixture of these diols, highly preferably 1,4-cyclohexanedimethanol.

6. The use according to one of claims 1 or 5, the fibre according to claim 2 or 5, or the manufacturing method according to any of claims 3 to 5, **characterised in that** the 1,4: 3,6-dianhydrohexitol (A) is isosorbide.

7. The use according to one of claims 1 and 5 to 6, the fibre according to one of claims 2 and 5 to 6, or the manufacturing method according to one of claims 3 to 6, **characterised in that** the fibre comprises one or more additional polymers and/or one or more additives.

8. The use of a fibre according to one of claims 5 to 6, for manufacturing a textile.

9. The use of a fibre according to claims 5 to 6, for the manufacture of a nonwoven fabric.
